# EUROPEAN PATENT APPLICATION

(11) **EP 4 428 197 A1**
(43) Date of publication of application: **11.09.2024**
(21) Application number: 22889847.4
(22) Date of filing: 26.10.2022
(51) Int. Cl.: C08L 83/06, C08K 3/08, C08K 7/00, C08L 101/00

(54) **THERMOSETTING CONDUCTIVE RESIN COMPOSITION AND METHOD FOR PRODUCING ELECTRONIC COMPONENT**

(30) Priority: 02.11.2021 JP 2021179608
(71) Applicant: Shoei Chemical Inc., Tokyo 163-0443 (JP)
(72) Inventor: ESAKI Soichiro, Tosu-shi, Saga 841-0048 (JP)
(74) Representative: Müller-Boré & Partner Patentanwälte PartG mbB
(86) International application number: PCT/JP2022/039885
(87) International publication number: WO 2023/080027

(57) **Abstract**

Provided is a thermosetting conductive resin composition comprising: a conductive powder and a resin binder, in which the conductive powder comprises a flake-shaped conductive powder; the resin binder comprises a thermosetting silicone resin having hydroxyl groups; and 25.0% by mass or more of the resin binder is the thermosetting silicone resin having hydroxyl groups. The present invention can provide a thermosetting conductive resin composition capable of forming conductive resin layers having high moisture resistance and excellent conductivity even when multiple kinds of resins including a silicone resin are used as resin binders.

## Description

### TECHNICAL FIELD

The present invention relates to a thermosetting conductive resin composition for forming electrodes of electronic components for producing electronic components by forming electrodes on an electrode-forming body for electronic components such as a laminated body for multilayer electronic components and a cathode-forming body for solid electrolytic capacitors. The present invention also relates to a method for producing an electronic component by forming electrodes on an electrode-forming body for electronic components such as a laminated body for multilayer electronic components and a cathode-forming body for solid electrolytic capacitors.

### BACKGROUND ART

In recent years, electronic devices have been used in harsher environments than ever before and thus electronic components mounted in electronic devices have also been required to be capable of being failure-free even when used in harsher environments than ever before.

Specifically, high impact resistance is required so that even if the electronic components are subjected to impact, for example, by being dropped in the case of mobile devices such as smartphones or by vibration during driving in the case of electronic devices mounted in automobiles, the electronic components do not drop from the substrate due to generation of cracks or interface delamination at the connection part between a substrate and electronic components or cracks are not generated on the electronic components themselves.

Mobile devices and automobiles can be exposed to humid environments, and thus the electronic components mounted in the mobile devices and the automobiles are required to have high moisture resistance so as to prevent moisture from penetrating inside.

Here, Patent Literature 1 has disclosed a composition that does not include an epoxy resin and includes a silicone rubber (polydimethylsiloxane) in a gel form and a conductive powder and has described that by forming a conductive resin layer on the outer surface of the external electrode of a multilayer ceramic capacitor using the composition, bending strength of the outer electrode further excellent than when using a composition including an epoxy resin is achieved, while having moisture resistance in the sense that the conductive resin layer can effectively block penetration of a plating solution.

Incidentally, from the viewpoint of compatibility between resins and solubility in solvents, the ease of designing conductive resin compositions will be improved if a single resin can be used as a resin for the conductive resin compositions. Practically, however, a wide range of properties are required and it is frequently impractical to satisfy all of the required properties with a single resin. In addition, from the viewpoint of quickly responding to diversifying needs in recent years, it is frequently more practical to design the conductive resin compositions by combining multiple kinds of resins.

Therefore, in the case where conductive compositions are actually designed, multiple kinds of resins are frequently combined. However, in the case where multiple kinds of resins are used in combination, the ratio of each resin to the total resin binder decreases, and thus the properties obtained in the case where a single resin is used cannot be obtained in some cases.

As the total amount of resin binder in the entire composition becomes higher, the proportion of conductive components in the conductive resin layer obtained by heating the composition becomes lower. Therefore, a smaller proportion of the included resin binder in the composition is preferable for achieving high conductivity. Therefore, in the case where multiple kinds of resins are used, the proportion of each resin to the total components forming the conductive resin layer is also reduced in many cases and the properties to be obtained when a single resin is used are no longer obtained in some cases.

For example, in contrast to a conventional example in which an epoxy resin and a silicone rubber are combined, Patent Literature 1 has achieved better flexural strength than that in the conventional example by using a silicone rubber alone. In other words, the flexural properties obtained with the silicone rubber alone are no longer obtained by combining the resins (the silicone rubber and the epoxy resin), that is, this fact means that the flexural properties are lowered by using the resins.

### CITATION LIST

### PATENT LITERATURE

Patent Literature 1: Japanese Patent Publication 2014-135463-A

### SUMMARY OF INVENTION

### Technical Problem

As described above, Patent Literature 1 has disclosed that a certain level of moisture resistance can be obtained by using the silicone rubber. However, silicone rubbers and silicone resins are frequently used for insulating applications due to remarkably high insulating properties and conductivity is difficult to obtain in many cases when the silicone resin is used for conductive applications.

In addition, as described above, in the case where other resins are used in combination depending on the required properties for further satisfying other properties, the required moisture resistance may fail to be obtained.

Therefore, a first object of the present invention is to provide a thermosetting conductive resin composition capable of forming a conductive resin layer having high moisture resistance and excellent conductivity even when multiple kinds of resins including a silicone resin are used as the resin binder. A second object of the present invention is to provide a thermosetting conductive resin composition that can form a conductive resin layer having high moisture resistance and excellent conductivity even when multiple kinds of resins including a silicone resin are used as a resin binder and can also easily satisfy other properties.

### Solution to Problem

As intensive studies for solving the above problems, the inventors of the present invention have found that a thermosetting conductive resin composition for forming a conductive resin layer comprising a flake-shaped conductive powder and a resin binder, in which the resin binder comprises a thermosetting silicone resin having hydroxyl groups; and 25.0% by mass or more of the resin binder is the thermosetting silicone resin having hydroxyl groups allows a conductive resin layer having high moisture resistance and excellent conductivity to be formed even when multiple kinds of resins comprising the silicone resin as the resin binder. In addition, the thermosetting conductive resin composition that easily satisfies other properties can be obtained. Consequently, the inventors of the present invention have accomplished the present invention.

That is, the present invention (1) provides a thermosetting conductive resin composition comprising:
a conductive powder and a resin binder, in which
the conductive powder comprises a flake-shaped conductive powder;
the resin binder comprises a thermosetting silicone resin having hydroxyl groups; and
25.0% by mass or more of the resin binder is the thermosetting silicone resin having hydroxyl groups.

In addition, the present invention (2) provides the thermosetting conductive resin composition according to (1), in which 4.0% by mass or more of the components forming a conductive resin layer obtained by heating the thermosetting conductive resin composition is the thermosetting silicone resin having hydroxyl groups.

In addition, the present invention (3) provides the thermosetting conductive resin composition according to (1) or (2), in which 70.0% by mass or less of the resin binder is the thermosetting silicone resin having hydroxyl groups.

In addition, the present invention (4) provides the thermosetting conductive resin composition according to any one of (1) to (3), in which the resin binder further comprises a thermoplastic resin.

In addition, the present invention (5) provides the thermosetting conductive resin composition according to any one of (1) to (4), in which the resin binder further comprises one or more resins selected from the group consisting of a cellulose-based resin, an acetal-based resin, a polyamide resin, an epoxy resin, an acrylic resin, and a (meth)acrylic resin.

In addition, the present invention (6) provides the thermosetting conductive resin composition according to any one of (1) to (5), in which a moisture permeability amount determined by a moisture permeability amount measurement test described below is 80.0 mg or less.

### <Moisture Permeability Amount Measurement Test>

The conductive resin composition is cast at a thickness of 250 µm onto a PET film and the cast composition is cured under conditions of 200°C for 60 minutes. The obtained cured film is cut out in a circular shape having a diameter of 7.5 mm and the circular film is fixed with an adhesive so as to cover a 5 ml grass bottle containing 2 g of silica gel. Thereafter, the glass bottle is placed in a 750 ml container containing 100 ml of purified water so that the cured film does not come in contact with the purified water and the resultant container in a sealed state is placed in a dryer set at 65°C and left to stand for 15 hours. Subsequently, the moisture permeability amount is calculated using the following formula (1): Moisture permeability amount (amount of increased weight) = Weight of glass bottle after being placed in dryer - Weight of glass bottle before being placed in dryer

In addition, the present invention (7) provides the thermosetting conductive resin composition according to any one of (1) to (5), in which an elongation ratio determined by an elongation ratio measurement test described below is 0.40% or more.

### <Elongation Ratio Measurement Test>

The conductive resin composition is cast at a thickness of 250 µm onto a PET film and the cast composition is cured under conditions of 200°C for 60 minutes. The obtained cured film is cut out in a rectangle having a width of 5 mm. A coated film length is measured when a tensile load of 9.8 N is applied in a major axis direction using a viscoelasticity measurement apparatus. Subsequently, the elongation ratio is calculated using the following formula (2): Elongation ratio (%) = (Elongated length when load is applied/Length before load is applied) × 100

In addition, the present invention (8) provides a method for producing an electronic component, the method comprising:
a preparation step of preparing an electrode-forming body for electronic components; and
an electrode forming step of forming an electrode on an outer surface of the electrode-forming body for electronic components, in which
a conductive resin layer is formed on the electrode-forming body for electronic components by applying the thermosetting conductive resin composition according to any one of (1) to (7) onto the electrode-forming body for electronic components and subsequently curing the thermosetting conductive resin composition in the electrode forming step.

### Advantageous Effect of Invention

According to the present invention, the thermosetting conductive resin composition capable of forming conductive resin layers having high moisture resistance and excellent conductivity even when multiple kinds of resins including a silicone resin are used as resin binders can be provided. According to the present invention, a thermosetting conductive resin composition that can form a conductive resin layer having high moisture resistance and excellent conductivity even when multiple kinds of resins including a silicone resin are used as a resin binder and can also easily satisfy other properties can also be provided.

### DESCRIPTION OF EMBODIMENTS

The thermosetting conductive resin composition according to the present invention is a thermosetting conductive resin composition comprising: a conductive powder and a resin binder, in which the conductive powder comprises a flake-shaped conductive powder; the resin binder comprises a thermosetting silicone resin having hydroxyl groups; and 25.0% by mass or more of the resin binder is the thermosetting silicone resin having hydroxyl groups.

The thermosetting conductive resin composition according to the present invention is a thermosetting conductive resin composition that is cured by heating to form a cured film (a conductive resin layer). A heating temperature is not particularly limited. For example, a temperature in the range of 150°C to 300°C or 180°C to 250°C can be exemplified.

The thermosetting conductive resin composition according to the present invention includes the conductive powder as a conductive material. Examples of the conductive powder include metal powders including at least one of Ag, Cu, Ni, Pd, Pt, Au, or Al as conductive components, alloy powders including at least one of the conductive components described above, and conductive powders having a coated layer including Ag such as a silver-coated copper powder and a silver-coated nickel powder. From the viewpoint of excellent conductivity, at least either of Ag and Cu is preferably included. The silver powder and the silver-coated copper powder are more preferable and the silver powder is particularly preferable. From the viewpoint of low cost, the silver-coated copper powder, the copper powder, and a copper alloy powder not including expensive metallic components such as precious metals or rare metals are preferable and the copper powder is particularly preferable. As the conductive powders having a coated layer including Ag such as the silver-coated copper powder and the silver-coated nickel powder, the coated layer including Ag is required to cover at least a part of the surface of the copper powder or the nickel powder.

In the thermosetting conductive resin composition according to the present invention, the conductive powder includes a flake-shaped conductive powder. The flake-shaped conductive powder is preferably included in 20.0% by mass or more, more preferably included in 40.0% by mass or more, further preferably included in 60.0% by mass or more, and is particularly preferably included in 80.0% by mass or more in the total conductive powder. The content ratio of the flake-shaped conductive powder relative to the total conductive powder within the above range allows the conductivity and adhesion of the obtained conductive resin layer to be high.

In the thermosetting conductive resin composition according to the present invention, the conductive powder can further include a spherical conductive powder.

The aspect ratio of the flake-shaped conductive powder is preferably 1.5 to 50.0, more preferably 2.0 to 30.0, and particularly preferably 5.0 to 20.0. The aspect ratio of the flake-shaped conductive powder within the above range allows the conductivity and adhesion of the obtained conductive resin layer to be high. In the present invention, the aspect ratio of the flake-shaped conductive powder is determined as the average value of the ratio of the major axis to the thickness (major axis/thickness) determined by measuring the major axes and thicknesses of arbitrarily selected 50 conductive powders in scanning electron microscope (SEM) image observation.

The number average particle diameter of the flake-shaped conductive powder when measured using a scanning electron microscope (SEM) is preferably 0.1 µm to 20.0 µm, more preferably 0.3 µm to 15.0 µm, further preferably 0.5 µm to 10.0 µm, and particularly preferably 1.0 µm to 5.0 µm. The number average particle diameter of the flake-shaped conductive powder within the above range allows the conductivity and adhesion of the obtained conductive resin layer to be high. In the present invention, the major axes of the arbitrarily selected 50 conductive powders are measured in SEM (scanning electron microscope) image observation and the average value is determined as the number average particle diameter of the flake-shaped conductive powder.

The specific surface area of the flake-shaped conductive powder is preferably 0.5 m²/g to 5.0 m²/g and particularly preferably 0.6 m²/g to 4.0 m²/g. The specific surface area of the flake-shaped conductive powder within the above range allows the conductivity and adhesion of the obtained conductive resin layer to be high.

The volume-based cumulative 50% particle diameter (D₅₀) of the spherical conductive powder is preferably 0.01 µm to 7.0 µm and particularly preferably 0.03 µm to 5.0 µm. The D₅₀ of the spherical conductive powder within the above range allows the conductivity and adhesion of the obtained conductive resin layer to be high. In the present invention, D₅₀ was determined as the 50% value (D₅₀) in the volume-based cumulative fraction using a laser diffraction particle size analyzer.

The specific surface area of the spherical conductive powder is preferably 0.2 m²/g to 3.0 m²/g and particularly preferably 0.3 m²/g to 2.5 m²/g. The specific surface area of the spherical conductive powder within the above range allows the conductivity and adhesiveness of the obtained conductive resin layer to be high.

The thermosetting conductive resin composition according to the present invention includes at least a thermosetting silicone resin having hydroxyl groups as the resin binder and 25.0% by mass or more of the total resin binder is the thermosetting silicone resin having hydroxyl groups.

The thermosetting silicone resins having hydroxyl groups is preferably a condensation-type thermosetting silicone resin having hydroxyl groups and is cured by a condensation reaction that proceeds by heating, more preferably a dehydration condensation-type silicone resin having hydroxyl groups and is cured by a dehydration condensation reaction that proceeds by heating, and particularly preferably a dehydration condensation-type thermosetting silicone resin having hydroxyl groups bonded to silicon atoms (silanol groups) and is cured by a dehydration condensation reaction that proceeds by heating.

In the thermosetting conductive resin composition according to the present invention, 25.0% by mass or more of the total resin binder is the thermosetting silicone resin having hydroxyl groups. Although the reason is not certain, the composition can form the conductive resin layer having high moisture resistance and excellent conductivity even in the case where other resins different from the thermosetting silicone resin having hydroxyl groups are combined.

From the viewpoint of obtaining the conductive resin layer having excellent moisture resistance and excellent conductivity, in the thermosetting conductive resin composition according to the present invention, the content ratio of the thermosetting silicone resin having hydroxyl groups is preferably 30.0% by mass or more, more preferably 40.0% by mass or more, more preferably 50.0% by mass or more, more preferably 60.0% by mass or more, more preferably 70.0% by mass or more, more preferably 80.0% by mass or more, more preferably 90.0% by mass or more, and particularly preferably 95.0% by mass or more relative to the total resin binder. From the viewpoint of obtaining the conductive resin layer having excellent moisture resistance and excellent conductivity and at the same time further satisfying other properties, in the thermosetting conductive resin composition according to the present invention, the content ratio of the thermosetting silicone resin having hydroxyl groups is preferably 95.0% by mass or less, more preferably 90.0% by mass or less, more preferably 80.0% by mass or less, more preferably 70.0% by mass or less, more preferably less than 70.0% by mass, more preferably 60.0% by mass or less, more preferably 50.0% by mass or less, more preferably 40.0% by mass or less, and particularly preferably 35.0% by mass or less. In the present invention, other properties described above include one or more of flexibility, impact resistance, printability, and heat resistance. Some of the thermosetting conductive resin compositions according to the present invention have a higher elongation ratio as measured by the elongation ratio measurement method specified in the present specification. Such a composition having a higher elongation ratio has higher flexibility, which increases impact resistance and facilitates relaxation of stress caused by deflection of the substrate due to physical impact, thermal impact, and the like.

The thermosetting conductive resin composition according to the present invention includes preferably 4.0% by mass or more, more preferably 5.0% by mass or more, more preferably 6.0% by mass or more, more preferably 7.0% by mass or more, more preferably 8.0% by mass or more, preferably 9.0% by mass or more, preferably 10.0% by mass or more, preferably 11.0% by mass or more, and particularly preferably 12.0% by mass or more of the thermosetting silicone resin having hydroxyl groups in the components forming the conductive resin layer obtained by heating the thermosetting conductive resin composition, which provides the conductive resin layer having excellent moisture resistance and excellent conductivity. The thermosetting conductive resin composition according to the present invention includes preferably 15.0% by mass or less, more preferably 14.0% by mass or less, more preferably 13.0% by mass or less, more preferably 12.0% by mass or less, preferably 11.0% by mass or less, preferably 10.0% by mass or less, more preferably 9.0% by mass or less, preferably 8.0% by mass or less, preferably 7.0% by mass or less, and particularly preferably 6.0% by mass or less of the thermosetting silicone resin having hydroxyl groups in the components forming the conductive resin layer obtained by heating the thermosetting conductive resin composition, which provides the conductive resin layer having excellent moisture resistance and excellent conductivity and at the same time easily satisfies other properties. In the present invention, other properties described above include one or more of flexibility, impact resistance, printability, and heat resistance.

The thermosetting conductive resin composition according to the present invention is preferable because 4.0% by mass or more of the thermosetting silicone resin having hydroxyl groups included in the total amount of the conductive powder, the resin binder, and other components different from the conductive powder and the resin binder that form the conductive resin layer obtained by heating the thermosetting conductive resin composition allows the conductive resin layer having excellent moisture resistance and excellent conductivity to be obtained. The thermosetting conductive resin composition according to the present invention provides the conductive resin layer having high moisture resistance and excellent conductivity and at the same time easily satisfies other properties by including preferably 15.0% by mass or less, more preferably 14.0% by mass or less, more preferably 13.0% by mass or less, more preferably 12.0% by mass or less, more preferably 11.0% by mass or less, more preferably 10.0% by mass or less, more preferably 9.0% by mass or less, more preferably 8.0% by mass or less, more preferably 7.0% by mass or less, and particularly preferably 6.0% by mass or less of the thermosetting silicone resin having hydroxyl groups in the total amount of the conductive powder, the resin binder, and other components different from the conductive powder and the resin binder that form the conductive resin layer obtained by heating the thermosetting conductive resin composition. In the present invention, other properties described above include one or more of flexibility, impact resistance, printability, and heat resistance.

The thermosetting silicone resin having hydroxyl groups is cured by heating without using a curing agent or a catalyst. As a type of the heat curing, a condensation curing type, in which a condensation reaction proceeds by heating to cure the composition, is preferable and a dehydration condensation type, in which the dehydration condensation reaction proceeds by heating to cure the composition, is particularly preferable.

The position and number of hydroxyl groups in thermosetting silicone resin having hydroxyl groups are not particularly limited. For example, one end of the polymer, both ends of the polymer, and side chains of the polymer can have the hydroxyl groups. From the viewpoint of excellent conductivity, at least the side chains preferably have a plurality of hydroxyl groups. The hydroxyl groups can be bonded to silicon atoms or to other atoms other than silicon atoms (for example, carbon atoms). In the present specification, OH groups bonded to Si in silanol groups are also referred to as hydroxyl groups.

The main skeleton (main chain) of the thermosetting silicone resin having hydroxyl groups is required to have siloxane units. For example, a polymer consisting of siloxane units alone (polysiloxane) or a copolymer containing siloxane units can be exemplified. Examples of the copolymers containing siloxane units include copolymers of at least any of monomers, oligomers, and polymers containing the siloxane units and at least any of monomers, oligomers, and polymers without containing the siloxane units. These polymers and copolymers can be linear or branched.

The thermosetting silicone resins having hydroxyl groups can have other functional groups other than hydroxyl groups on the side chains or ends of the polymer. Examples of other functional groups include alkenyl groups, hydrogensilyl groups, (meth)acryloyl groups, epoxy groups, amino groups, carbinol groups, mercapto groups, carboxy groups, phenol groups, aryl groups, alkyl groups such as a methyl group, and aromatic groups such as a phenyl group. As the functional groups in the thermosetting silicone resin, alkyl groups such as a methyl group and aromatic groups such as a phenyl group are preferable from the viewpoint of moisture resistance, hydroxyl groups are preferable from the viewpoint of conductivity, and epoxy groups are preferable from the viewpoint of adhesion.

The thermosetting silicone resin having hydroxyl groups can be modified resins in which various oligomers, polymers, or the like are introduced (grafted) to the side chains or ends of the polymer or can be cross-linked resins in which the resins are cross-linked.

The molecular weight (weight average molecular weight Mw) of the thermosetting silicone resin having hydroxyl groups is not particularly limited and is preferably 1,000 to 300,000 and particularly preferably 2,000 to 200,000.

The thermosetting conductive resin composition according to the present invention can further include curing agents and catalysts. Examples of the curing agents and the catalysts include platinum-based, titanium-based, aluminum-based, zinc-based, iron-based, and phosphate-based curing agents and catalysts.

The thermosetting conductive resin composition according to the present invention can further include resins different from the thermosetting silicone resin having hydroxyl groups. The resins different from the thermosetting silicone resin having hydroxyl groups can be thermosetting resins or can be thermoplastic resins. The thermosetting resins are preferable from the viewpoint of heat resistance, whereas the thermoplastic resins are preferable from the viewpoint of impact resistance and flexibility. Examples of the resins different from the thermosetting silicone resin having hydroxyl groups include cellulose-based resins such as ethyl cellulose, acetal-based resins such as a polyvinyl acetal resin, polyimide resins, polyamide resins, polyamideimide resins, epoxy resins, acrylic resins, butadiene-based resins such as polybutadiene, (meth)acrylic resins, styrene resins, phenol resins, alkyd resins, polyurethane resins, and silicone resins different from the thermosetting silicone resin having hydroxyl groups. Examples of the polyvinyl acetal resin include a polyvinyl formal resin, a polyvinyl acetoacetal resin, and a polyvinyl butyral resin and the polyvinyl butyral resin is particularly preferable. The polyvinyl butyral resin can be referred to simply as a "butyral resin". From the viewpoint of impact resistance and flexibility, the cellulose-based resins, the acetal-based resins, the polyamide resins, the acrylic resins, the (meth)acrylic resins, and thermoplastic silicone resins are preferable as the thermoplastic resins and the ethyl cellulose resin, the polyvinyl acetal resin, the polyamide resins, the acrylic resins, and the (meth)acrylic resins are particularly preferable. Thermoplastic silicone resin is preferable from the viewpoint of moisture resistance. Including the cellulose-based resins such as ethylcellulose as the resin allows high moisture resistance and conductivity of the conductive resin layer to be maintained and at the same time printability and flexibility to be improved. Including the epoxy resins as the resin allows high moisture resistance and conductivity of the conductive resin layer to be maintained and at the same time adhesion of the conductive resin layer to be improved. Including the polyvinyl acetal resins as the resin allows high moisture resistance and conductivity of the conductive resin layer to be maintained and at the same time flexibility of the conductive resin layer to be improved. Including the polyamide resins as the resin allows high moisture resistance and conductivity of the conductive resin layer to be maintained and at the same time flexibility to be improved. Including the acrylic resins as the resin allows high moisture resistance and conductivity of the conductive resin layer to be maintained and at the same time flexibility to be improved. Including the polyimide resins as the resin allows high moisture resistance and conductivity of the conductive resin layer to be maintained and at the same time heat resistance to be improved.

The content of the resin binder in the thermosetting conductive resin composition according to the present invention is preferably 3.0 parts by mass to 30.0 parts by mass, more preferably 3.0 parts by mass to 28.0 parts by mass, more preferably 3.0 parts by mass to 25.0 parts by mass, more preferably 5.0 parts by mass to 25.0 parts by mass, more preferably 7.0 parts by mass to 23.0 parts by mass, and particularly preferably 11.0 parts by mass to 20.0 parts by mass relative to 100.0 parts by mass of the conductive powder. The thermosetting conductive resin composition having the resin binder content within the above range allows the conductive resin layer having excellent conductivity and adhesion to be easily obtained. In addition, the conductive resin composition tends to have excellent printability when applied to the electrode-forming body.

The thermosetting conductive resin composition according to the present invention can further include organic solvents. Examples of the included organic solvents include, but are not particularly limited to, terpineol, dihydroterpineol, dihydroterpineol acetate, secondary butyl alcohol, butylcarbitol, butylcarbitol acetate, and benzyl alcohol.

In addition to the above components, the thermosetting conductive resin composition according to the present invention can include additives such as defoamers, plasticizers, dispersing agents, and rheology adjusters, if necessary. Examples of the plasticizers include dimethyl phthalate, diethyl phthalate, dibutyl phthalate, di-2-ethylhexyl phthalate, di-normal-octyl phthalate, butyl benzyl phthalate, dioctyl adipate, diisononyl adipate, dibutyl sebacate, diethyl sebacate, dioctyl sebacate, tricresyl phosphate, chlorinated paraffin, and cyclohexane 1,2-dicarboxylic acid diisononyl ester (DINCH). Examples of the rheology modifiers include silica powder.

The thermosetting conductive resin composition according to the present invention is suitably used for the forming external electrode of multilayer electronic components and for forming the cathode of solid electrolytic capacitors.

The moisture permeability amount of the thermosetting conductive resin composition according to the present invention is preferably 80.0 mg or less. The thermosetting conductive resin composition having the moisture permeability within the above range allows electronic components having excellent moisture resistance to be obtained in the case where the conductive resin layer is formed using the conductive resin composition according to the present invention. A method of measuring the moisture permeability amount of the conductive resin composition according to the present invention is not particularly limited. For example, the moisture permeability amount can be measured by a moisture permeability measurement test described below.

### <Moisture Permeability Amount Measurement Test>

The conductive resin composition is cast at a thickness of 250 µm onto a PET film and the cast composition is cured under conditions of 200°C for 60 minutes. The obtained cured film is cut out in a circular shape having a diameter of 7.5 mm and the circular film is fixed with an adhesive so as to cover a 5 ml grass bottle containing 2 g of silica gel. Thereafter, the glass bottle is placed in a 750 ml container containing 100 ml of purified water so that the cured film does not come in contact with the purified water and the resultant container in a sealed state is left to stand in a dryer set at 65°C for 15 hours. Subsequently, the moisture permeability amount is calculated using the following formula (1): Moisture permeability amount (amount of increased weight) = Weight of glass bottle after being placed in dryer - Weight of glass bottle before being placed in dryer

The specific resistance of the conductive resin layer obtained by using the thermosetting conductive resin composition according to the present invention is preferably 500 µΩ·cm or less and more preferably 250 µΩ·cm or less. The method of measuring the specific resistance of the conductive resin composition according to the present invention is not particularly limited. For example, the specific resistance can be measured by the following specific resistance measurement test.

### <Specific Resistance Measurement Test>

The conductive resin composition is cast at a width of 1 cm, a length of 5 cm, and a thickness of 50 µm on a slide glass substrate and cured under conditions of 200°C for 60 minutes to give a cured film. Thereafter, the resistance of the cured film surface is measured by a 4-terminal method using a digital multimeter (for example, KEITHLEY 2002, manufactured by Keithley Instruments, Inc.). The specific resistance is calculated from the obtained value and the sample thickness.

The elongation ratio of the conductive resin layer obtained by using the thermosetting conductive resin composition according to the present invention is preferably 0.20% or more, more preferably 0.30% or more, more preferably 0.40% or more, further preferably 0.45% or more, and particularly preferably 0.50% or more. The elongation ratio of the conductive resin layer obtained by using the thermosetting conductive resin composition is not particularly limited. For example, the elongation ratio can be set to 5.0% or less. The conductive resin layer having the elongation ratio within the above range is formed between the metal layer and the plating layer of the external electrode of a multilayer electronic component, whereby cracks or interface delamination is difficult to generate in the connection area between the substrate and the electronic component and cracks are difficult to generate in the electronic component itself, resulting in increasing the impact resistance of the electronic component. Therefore, forming the conductive resin layer by using the conductive resin composition according to the present invention between the metal layer and the plating layer of the external electrode of the multilayer electronic component allows the impact resistance of the electronic component to be increased. The method of measuring the elongation ratio is not particularly limited. For example, the elongation ratio can be measured by the following elongation ratio measurement test.

### <Elongation Ratio Measurement Test>

The conductive resin composition is cast at a thickness of 250 µm onto a PET film and the cast composition is cured under conditions of 200°C for 60 minutes. The obtained cured film is cut out in a rectangle having a short side (width) of 5 mm and a long side of 20 mm. Subsequently, the upper part and the lower part (both ends in the major axis direction) of the cured film is clamped in a viscoelasticity measurement apparatus (Type: DMA-7100, manufactured by Hitachi High-Tech Science Corporation) so that the length of a part to which load is applied is 10 mm to set the cured film in the viscoelasticity measurement apparatus. Using the viscoelasticity measurement apparatus, a coated film length is measured when a tensile load of 9.8 N is applied in a major axis direction of the cured film. Subsequently, the elongation ratio is calculated in accordance with the following formula (2): Elongation ratio (%) = (Elongated length when load is applied/Length before load is applied (10 nm)) × 100

The adhesion strength of the conductive resin layer obtained by using the thermosetting conductive resin composition according to the present invention is preferably 0.2 MPa or more, more preferably 0.3 MPa or more, further preferably 0.4 MPa or more, and particularly preferably 0.5 MPa or more. The adhesion strength of the conductive resin layer obtained by using the thermosetting conductive resin composition according to the present invention is not particularly limited. For example, the adhesion strength can be set to 20.0 MPa or less. The conductive resin layer having the adhesion strength within the above range is formed between the metal layer and the plating layer of the external electrode of the multilayer electronic component, whereby cracks or interface delamination is difficult to generate in the connection area between the substrate and the electronic component and cracks are difficult to generate in the electronic component itself, resulting in increasing the impact resistance of the electronic components. Therefore, forming the conductive resin layer by using the conductive resin composition according to the present invention between the metal layer and the plating layer of the external electrode of the multilayer electronic component allows the impact resistance of the electronic component to be increased. The excellent adhesion strength also allows the conductive resin layer to be difficult to peel off from the electrode-forming body for electronic components, resulting in easily maintaining the moisture resistance as the components. The method of measuring the adhesion strength is not particularly limited. For example, the adhesion strength can be measured by the following adhesion strength measurement test.

### <Adhesion Strength Measurement Test>

The conductive resin composition is cast at a thickness of 50 µm onto a slide glass substrate and an aluminum cylinder having a diameter of 3 mm is placed on the cast composition. The cast composition is cured under conditions of 200°C for 60 minutes. The adhesion strength is determined by measuring values at break when the cured film is stretched using a Bond Tester (Type: SS-30WD, manufactured by Seishin Trading Co., Ltd.) at a speed of 0.5 mm/s in a vertical direction.

The thermosetting conductive resin composition according to the present invention is suitable as a conductive resin composition for forming electrodes on an electrode-forming body (hereinafter referred to as "electrode-forming body for electronic components"), where electrodes are formed in the production of electronic components. Therefore, the thermosetting conductive resin composition according to the present invention is particularly suitable as a conductive resin composition for forming external electrodes of laminated bodies for multilayer electronic components and for forming cathodes of cathode-forming bodies for solid electrolytic capacitors.

In one example of use, the thermosetting conductive resin composition according to the present invention can be used in a method for producing an electronic component, the method comprising: a preparation step of preparing an electrode-forming body for electronic components, and an electrode forming step of forming an electrode on an outer surface of the electrode-forming body for electronic components. In the electrode forming step, the conductive resin layer is formed on the electrode-forming body for electronic components by using the thermosetting conductive resin composition according to the present invention to form the electrode.

The preparation step is a step of preparing the electrode-forming body for electronic components. The electrode-forming body for electronic components refers to an object on which electrodes are formed in the production process of the electronic components. Examples of the electrode-forming body for electronic components include a laminated body for multilayer electronic components formed of a plurality of ceramic layers and a plurality of internal electrode layers, a cathode-forming body for solid electrolytic capacitors formed of a anode and a dielectric layer formed on the anode surface, and an electrode-forming body for chip resistors equipped with end-surface electrodes.

The laminated body for multilayer electronic components is formed of a plurality of ceramic layers and a plurality of internal electrode layers. In the laminated body for multilayer electronic components, adjacent ceramic layers are connected to each other with an internal electrode layer interposed between the ceramic layers. Examples of the laminated body for multilayer electronic components include a laminated body for multilayer ceramic capacitors, a laminated body for multilayer ceramic inductors, and a laminated body for piezoelectric actuators.

Examples of the substances forming the ceramic layers constituting the laminated body for multilayer electronic components include barium titanate, strontium titanate, calcium titanate, barium zirconate, strontium zirconate, calcium zirconate, and calcium strontium zirconate.

Examples of the substances forming the internal electrode layer constituting the laminated body for multilayer electronic components include any of nickel, palladium, silver, copper, and gold, or alloys including one or more of these metals (for example, an alloy of silver and palladium).

The cathode forming body for solid electrolytic capacitors is made of a anode and a dielectric layer formed on the anode surface. Examples of the combinations of substances forming the anode and the dielectric layer include tantalum and tantalum pentoxide, aluminum and aluminum oxide, and niobium and niobium pentoxide.

The electrode forming step is a step of forming an electrode onto the outer surface of the electrode-forming body for electronic components. In the present invention, the phrase "forming the conductive resin layer on the electrode-forming body for electronic components" includes both of the case where the conductive resin layer is formed directly on the surface of the electrode-forming body for electronic components and the case where another layer or a film (for example, a metal layer and a conductive material layer) is formed on the electrode-forming body for electronic components first and then the conductive resin layer is formed on the surface thereof. Therefore, in the electronic component obtained by the method for producing an electronic component, both of the case where the conductive resin layer is formed directly on the surface of the electrode-forming body for electronic components and the case where the conductive resin layer is formed in a state where another layer or film (for example, the metal layer and the conductive material layer) is intervened between the electrode-forming bodies for electronic components.

In the electrode forming step, the position and method of forming electrodes, the thickness of the electrodes, the number of electrodes, the type of metal constituting the electrodes, and the shape of the conductive powder used for electrode formation are appropriately selected depending on the electronic components as production targets.

In the electrode forming step, the conductive resin layer is formed on the electrode-forming body for electronic components using the thermosetting conductive resin composition according to the present invention.

In the electrode forming step, the layer of the thermosetting conductive resin composition according to the present invention is formed at a predetermined position on the electrode-forming body for electronic components by applying the thermosetting conductive resin composition according to the present invention to the electrode-forming body for electronic components, and thereafter the conductive resin layer is formed by curing the thermosetting conductive resin composition according to the present invention. The curing described above is performed by heating.

In the electrode forming step, the conductive resin layer can be formed directly on the surface of the electrode-forming body for electronic components by applying the conductive resin composition according to the present invention directly to the surface of the electrode-forming body for electronic components. In the electrode forming step, appropriate steps can be included depending on the type of electronic components before the conductive resin layer is formed on the electrode-forming body for electronic components. For example, in the case of the multilayer electronic components, in the electrode forming step, the conductive resin layer is formed on the surface of a metal layer by forming the metal layer at a predetermined position of the electrode-forming body for the electronic component, thereafter forming the layer of the thermosetting conductive resin composition according to the present invention at a predetermined position in the electrode-forming body for electronic components by, for example, applying the thermosetting conductive resin composition according to the present invention on the surface of the metal layer, subsequently curing the thermosetting conductive resin composition according to the present invention. For example, in the case of the solid electrolytic capacitors, in the electrode forming step, the conductive resin layer is formed on the surface of a conductive layer by forming the conductive layer made of a carbon layer at a predetermined position of the cathode-forming body for solid electrolytic capacitors, thereafter forming the layer of the thermosetting conductive resin composition according to the present invention at a predetermined position in the electrode-forming body for electronic components by, for example, applying the thermosetting conductive resin composition according to the present invention on the surface of the conductive layer, subsequently curing the thermosetting conductive resin composition according to the present invention. In the electrode forming step, after the conductive resin layer is formed on the electrode-forming body for electronic components, the step can include appropriate steps depending on the type of the electronic components. For example, in the case of the multilayer electronic components, in the electrode formation step, the conductive resin layer is formed at a predetermined position on the electrode-forming body for electronic components, and thereafter a plating layer is formed on the surface of the conductive resin layer.

In the electrode forming step, the electrode can be formed by forming the conductive resin layer on the electrode-forming body for electronic components. In other words, in this aspect, the conductive resin layer alone constitutes the electrode.

In the electrode forming step, the layer of the thermosetting conductive resin composition according to the present invention can be formed at a predetermined position of the electrode-forming body for electronic components by applying the thermosetting conductive resin composition according to the present invention to the electrode-forming body for electronic components by a dipping method when the conductive resin layer is formed on the electrode-forming body for electronic components using the thermosetting conductive resin composition according to the present invention.

The first embodiment of the electrode forming step (hereinafter also referred to as an electrode forming step (1)) is an electrode forming step in the case where the electrode-forming body for electronic components is a laminated body for multilayer electronic components formed of ceramic layers and internal electrode layers. The electrode forming step (1) includes at least a conductive resin layer forming step (1A), in which the conductive resin layer is formed on the outer surface of the laminated body for multilayer electronic components using the conductive resin composition according to the present invention. The electrode forming step (1) is not particularly limited as long as the electrode forming step (1) includes the conductive resin layer forming step (1A) of forming the conductive resin layer on the outer surface of the laminated body for multilayer electronic components using the conductive resin composition according to the present invention. Examples of the electrode forming step (1) include an electrode forming step including at least a metal layer forming step, the conductive resin layer forming step (1A), and a plating layer forming step.

The metal layer formation step is a step of forming a metal layer electrically connected to the internal electrode layer on the outer surface of the laminate for multilayer electronic components. The metal forming the metal layer is at least one of Cu, Ag, Pd, Ni, Sn, Al, Au, and Pt, or an alloy containing one or more of these metals. Methods for forming the metal layers are not particularly limited. Examples of the method include a dipping method, a plating method, a roll coating method, a screen printing method, and a sputtering method. The thickness, shape, location, and number of metal layers can be appropriately selected.

The conductive resin layer forming step (1A) is a step of forming a conductive resin layer on the surface of the metal layer formed by performing the metal layer forming step, using the conductive resin composition according to the present invention.

In the conductive resin layer forming step (1A), the layer of the conductive resin composition of the present invention is formed on the surface of the metal layer formed by performing the metal layer forming step by applying the conductive resin composition according to the present invention to the surface of the metal layer, and subsequently the conductive resin layer is formed by curing the conductive resin composition according to the present invention. The method of forming the conductive resin layer is not particularly limited. Example of the method include the dipping method, the screen printing method, and the roll coating method. Of these methods, the dipping method is preferable. The thickness, shape, position, and number of the conductive resin layers can be appropriately selected.

The plating layer forming step is a step of forming a plating layer on the surface of the conductive resin layer. Examples of the metal forming the plating layer include at least one of Ni, Cu, Sn, Ag, and Au, or an alloy including one or more of these metals. The method of forming the plating layer is not particularly limited. Examples of the method include electrolytic plating and electroless plating. The thickness, shape, position, and number of the plating layers can be appropriately selected.

The second embodiment of the electrode forming step (hereinafter also referred to as an electrode forming step (2)) is an electrode forming step in the case where the electrode-forming body for electronic components is the cathode-forming body for solid electrolytic capacitors. The electrode forming step (2) includes at least a conductive resin layer forming step (2A), in which the conductive resin layer is formed on the outer surface of the cathode-forming body for solid electrolytic capacitors using the conductive resin composition according to the present invention. The electrode forming step (2) is not particularly limited as long as the electrode forming step (2) includes the conductive resin layer forming step (2A) of forming the conductive resin layer on the outer surface of the cathode-forming body for solid electrolytic capacitors using the thermosetting conductive resin composition according to the present invention. Examples of the electrode forming step (2) include an electrode forming step including at least a carbon layer forming step and the conductive resin layer forming step (2A).

The solid electrolyte layer forming step is a step of forming a solid electrolyte layer on the outer surface of the cathode-forming body for solid electrolytic capacitors. A method of forming the solid electrolyte layer is not particularly limited and the solid electrolyte layer can be formed with known solid electrolytes produced by chemical methods. Examples of the solid electrolytes include conductive polymers such as polypyrrole, polyaniline, polythiophene, and polyacetylene.

The carbon layer forming step is a step of forming a carbon layer on the solid electrolyte layer. A method of forming the carbon layer is not particularly limited. Examples of the method include a method for applying a carbon paste including a resin, a solvent, and a carbon powder onto the solid electrolyte layer by the dipping method, and thereafter drying and/or curing the applied paste. The carbon powder is not particularly limited. A graphite powder is preferable.

The conductive resin layer forming step (2A) is the step of forming the conductive resin layer on the carbon layer by using the conductive resin composition according to the present invention. The method of forming the conductive resin layer is not particularly limited. Examples of the method include a method for applying the conductive resin composition according to the present invention by the dipping method, the screen printing method, the roll coating method, and other methods, and subsequently curing the thermosetting conductive resin composition.

Another embodiment of the electrode forming step is an electrode forming step (3) in the case where the electrode-forming body for electronic components is an electrode-forming body for chip resistors equipped with end-surface electrodes. The electrode forming step (3) has, at least, a step of forming the conductive resin layer on the end-surface electrode. The method of forming the conductive resin layer is not particularly limited. Example of the method include a method for applying the thermosetting conductive resin composition according to the present invention by the dipping method, the screen printing method, the roll coating method, and other methods, and subsequently curing the thermosetting conductive resin composition according to the present invention. The electrode-forming body for chip resistors equipped with the end-surface electrodes includes an insulating substrate, a pair of top end electrodes formed on the insulating substrate, a resistor formed between the pair of top end electrodes, a protective layer formed so as to cover a part of the pair of top end electrodes and the resistor, and the end-surface electrodes formed on the end-surface of the insulating substrate.

Another embodiment of the electrode forming step is an electrode forming step (4) in the case where the electrode-forming body for electronic components is a substrate. The electrode forming step (4) includes at least a step of forming the conductive resin layer on the substrate. The method of forming the conductive resin layer is not particularly limited. Example of the method include a method of applying the thermosetting conductive resin composition according to the present invention by screen printing, inkjet printing, or dispenser printing, and subsequently curing the conductive composition according to the invention. Examples of the substrates include alumina substrates, glass epoxy substrates, paper-phenolic substrates, and paper-epoxy substrates.

Another embodiment of the electrode forming step is an electrode forming step (5) in the case where the electrode-forming body for electronic components is a film. The electrode forming step (5) includes at least a step of forming the conductive resin layer on the film. The method of forming the conductive resin layer is not particularly limited. Example of the method include a method of applying the thermosetting conductive resin composition according to the present invention by screen printing, inkjet printing, or dispenser printing, and subsequently curing the conductive composition according to the invention. Examples of films include polyimide films and PET films.

Hereinafter, the present invention will be described with reference to specific Experimental Examples. The present invention, however, is not limited to these Examples.

### [Examples]

### <Production of Flake-shaped Silver-coated Copper Powder and Spherical Silver-coated Copper powder>

Silver-coated copper powder coated with silver at a ratio of 10 parts by mass to 90 parts by mass of spherical copper powder (Type: MA-CO3K, manufactured by MITSUI MINING & SMELTING CO., LTD.) was produced and the obtained spherical silver-coated copper powder (Conductive Powder 2) was pulverized in a ball mill using palmitic acid as a lubricant to produce a flake-shaped silver-coated copper powder (Conductive Powder 1). The obtained spherical silver-coated copper powder was subjected to measurement using a laser diffraction particle size analyzer to determine the 50% value (D₅₀) in a volume-based accumulated fraction. With respect to the obtained flake-shaped silver-coated copper powder, the number average particle diameters (D₅₀) and aspect ratios of 50 arbitrarily selected powders were measured in SEM (scanning electron microscope) image observation and an average values were determined. The specific surface area was also measured by a BET method.

### <Production of Spherical Silver Powder>

First, a spherical silver powder (Conductive Powder 4) was prepared based on a spray pyrolysis method described in Japanese Patent Publication S63-31522-B. Namely, with respect to the spherical silver powder, an aqueous solution in which a silver salt is dissolved was subjected to spray pyrolysis, and the collected silver powder was subjected to classification treatment to adjust the D₅₀ value. The obtained silver powder was subjected to measurement using a laser diffraction particle size analyzer to determine the 50% value (D₅₀) in terms of the volume-based accumulated fraction. The specific surface area was also measured by a BET method.

### <Production of Flake-shaped Silver Powder>

The spherical silver powder was produced by the method described above. The obtained spherical silver powder was pulverized in a ball mill using stearic acid as a lubricant to produce a flake-shaped silver powder (Conductive Powder 3). The number average particle diameters (D₅₀) and aspect ratios of 50 arbitrarily selected flake-shaped silver powder were measured in SEM (scanning electron microscope) image observation and the average values were determined. The specific surface area was also measured by a BET method.

### <Preparation of Conductive Resin Composition>

Conductive resin compositions were prepared by blending the conductive powders and binder components in the blending proportions listed in Table 1. The unit for the numerical values listed in Table 1 as blended amounts is parts by mass.

### · Conductive Powder 1

Flake-shaped silver-coated copper powder, aspect ratio: 20, D₅₀: 8.0 µm, specific surface area: 1.5 m²/g

### · Conductive Powder 2

Spherical silver-coated copper powder, D₅₀: 4.0 µm, specific surface area: 0.5 m2/g

### · Conductive Powder 3

Flake-shaped silver powder, aspect ratio: 30, D₅₀: 6.0 µm, specific surface area: 1.0 m²/g

### · Conductive Powder 4

Spherical silver powder, D₅₀: 2.3 µm, specific surface area: 0.5 m²/g

### · Silicone Resin 1

Thermosetting silicone resin having hydroxyl groups, dehydration-condensation type, Type No.: ES-1001N, manufactured by Shin-Etsu Chemical Co., Ltd., other functional groups: epoxy groups

### · Silicone Resin 2

Thermosetting silicone resin having hydroxyl groups, dehydration-condensation type, Type No.: KR-282, manufactured by Shin-Etsu Chemical Co., Ltd., other functional groups: methyl groups, phenyl groups

### · Silicone Resin 3

Thermosetting silicone resin without hydroxyl groups, addition curing type, Type No.: X-40-2756 (one-component type including curing catalyst), manufactured by Shin-Etsu Chemical Co., Ltd., other functional groups: alkenyl groups, methyl groups, phenyl groups.

### · Silicone Oil 1

Silicone oil, Type No.: X-22-169AS, manufactured by Shin-Etsu Chemical Co., Ltd., other functional group: epoxy groups (alicyclic)

### · Liquid Silicone Rubber 1

Silicone rubber, moisture cure type, Type No.: KE-3491, manufactured by Shin-Etsu Chemical Co., Ltd.

### · Epoxy Resin 1

Thermosetting epoxy resin, Type No.: EXA4816, manufactured by DIC Corporation

### · Polyvinyl Acetal Resin 1

Polyvinyl acetal resin (also referred to a polyvinyl butyral resin or a butyral resin), thermoplastic, Type No.: KS-10, manufactured by Sekisui Chemical Co., Ltd.

### · Polyamide Resin 1

Polyamide resin, thermoplastic, Type No.: PA-201, manufactured by T&K TOKA Co., Ltd.

### · Ethyl Cellulose Resin 1

Ethyl cellulose resin, thermoplastic, Type No.: ETHOCEL Standard45, manufactured by The Dow Chemical Company

The amount of the resin in the following Table refers to the amount of resin itself excluding a solvent.

### (Example 1)

Silicone Resin 1, Epoxy Resin 1, Polyvinyl Acetal Resin 1 (butyral resin), Conductive Powder 1, and benzyl alcohol were mixed in the proportion listed in Table 1, and thereafter the resultant mixture was kneaded using a three-roll mill (manufactured by INOUE MFG., INC.) to give a paste-like composition.

### (Example 2, Comparative Example 1, and Comparative Example 2)

Paste-like compositions were obtained using the same method as the method in Example 1 except that Silicone Resin 2, Silicone Oil 1, or Liquid Silicone Rubber 1 was used instead of Silicone Resin 1.

### (Example 3)

Silicone resin 1, Conductive Powder 1, and benzyl alcohol were mixed in the proportion listed in Table 1 and thereafter the resultant mixture was kneaded using a three-roll mill (manufactured by INOUE MFG., INC.) to give a paste-like composition.

### (Examples 4 to 12 and Comparative Examples 3 to 5)

The components listed in Table 1 were mixed in the proportions listed in Table 1 and thereafter the resultant mixtures were kneaded using a three-roll mill (manufactured by INOUE MFG., INC.) to give paste-like compositions.

The paste-like compositions obtained by Examples 1 to 12 and Comparative Examples 1 to 5 described above were diluted with benzyl alcohol and adjusted so that a viscosity at 25°C and a shear rate of 4 (1/s) was 30 Pa s, and thereafter the adjusted samples were evaluated as follows. The results are listed in Table 2.

### <Performance Evaluation>

### (Moisture Permeability Amount)

The conductive resin composition was cast at a thickness of 250 µm onto a PET film and the cast composition was cured under conditions of 200°C for 60 minutes to give a cured film. The obtained cured film was cut out in a circular shape having a diameter of 7.5 mm and the circular film was fixed with an adhesive so as to cover the bottle mouth of a 5 ml grass bottle containing 2 g of silica gel. Thereafter, the glass bottle was placed in a 750 ml container containing 100 ml of purified water so that the cured film did not come in contact with the purified water and the resultant container in a sealed state was placed in a dryer set at 65°C and left to stand for 15 hours. The weight of the glass bottle was measured before and after placing the glass bottle in the dryer and the weight increase was determined as the moisture permeability amount.

### (Specific Resistance)

The conductive resin composition was cast at a width of 1 cm, a length of 5 cm, and a thickness of 50 µm on a slide glass substrate and cured under conditions of 200°C for 60 minutes to give a cured film. The resistance of the cured film surface was measured by a 4-terminal method using a digital multimeter (KEITHLEY 2002, manufactured by Keithley Instruments, Inc.). The specific resistance was calculated from the obtained value and the sample thickness.

### (Elongation Ratio)

The conductive resin composition was cast at a thickness of 250 µm onto a PET film and the cast composition was cured under conditions of 200°C for 60 minutes to give a cured film. The obtained cured film was cut out in a rectangle having a short side (width) of 5 mm and a long side of 20 mm. Subsequently, the upper part and the lower part (both ends in the major axis direction) of the cured film was clamped in a viscoelasticity measurement apparatus (Type: DMA-7100, manufactured by Hitachi High-Tech Science Corporation) so that the length of a part to which load was applied is 10 mm to set the cured film in the viscoelasticity measurement apparatus. Subsequently, using the viscoelasticity measurement apparatus, a coated film length was measured when a tensile load of 9.8 N was applied in a major axis direction of the cured film. The elongation ratio was determined by calculating the ratio of the elongated length when the load was applied relative to the length of the part where the load was applied before the load was applied of 10 mm.

### (Printability)

The conductive resin composition listed in Table 1 was applied by the dipping method to a laminated body equipped with copper terminals having an approximately rectangular solid shape of a length of 3.2 mm, a width of 2.5 mm, and a height of 2.5 mm and forming the copper terminals on both end-surfaces of the laminated body laminated with a plurality of dielectric layers including barium titanate and a plurality of internal electrode layers including nickel. The applied composition was cured under conditions of 200°C for 60 minutes in an atmospheric atmosphere and a conductive resin layer was formed on the copper terminals described above to give a multilayer electronic component. The cross section of the obtained electronic component was observed with a scanning electron microscope to evaluate the shape of the conductive resin layer described above. In other words, the flatness of the end surface parts and the thickness and continuity of the corner parts were comprehensively evaluated (4-level evaluation), and a rating of 2 or more was considered to be acceptable (usable). A conductive resin layer that had flat end surfaces and corner parts having sufficient thickness and observing no discontinuity was determined to be "rating of 4, usable, and remarkably excellent shape", whereas a conductive resin layer in which the end surface parts had protruding shapes, the corner parts were discontinuous, and the copper terminals was exposed was determined to be "rating of 1, unusable, poor shape".

**[Table 1]**

| | Conductive Powder 1 | Conductive Powder 2 | Conductive Powder 3 | Conductive Powder 4 | Silicone Resin 1 | Silicone Resin 2 | Silicone Resin 3 | Silicone Oil 1 | Liquid Silicone Rubber 1 | Epoxy Resin 1 | Polyvinyl Acetal Resin 1 | Polyamide Resin 1 | Ethyl Cellulose Resin 1 | Silicone Resin Content A (% by mass) | Silicone Resin Content B (% by mass) |
|---|---|---|---|---|---|---|---|---|---|---|---|---|---|---|---|
| Example 1 | 100 | - | - | - | 5.0 | - | - | - | - | 8.0 | 5.0 | - | - | 27.8 | 4.2 |
| Example 2 | 100 | - | - | - | - | 5.0 | - | - | - | 8.0 | 5.0 | - | - | 27.8 | 4.2 |
| Example 3 | 100 | - | - | - | 5.0 | - | - | - | - | - | - | - | - | 1000 | 48 |
| Comp. Example 1 | 100 | - | - | - | - | - | - | 5.0 | - | 8.0 | 5.0 | - | - | 0.0 | 0.0 |
| Comp. Example 2 | 100 | - | - | - | - | - | - | - | 5.0 | 8.0 | 5.0 | - | - | 0.0 | 0.0 |
| Comp. Example 3 | 100 | - | - | - | - | - | - | - | - | 11.1 | 6.9 | - | - | 0.0 | 0.0 |
| Example 4 | 100 | - | - | - | 9.0 | - | - | - | - | - | 9.0 | - | - | 50.0 | 7.6 |
| Example 5 | 100 | - | - | - | 12.5 | - | - | - | - | - | - | 5.5 | - | 69.4 | 10.6 |
| Example 6 | 100 | - | - | - | 9.0 | - | - | - | - | - | - | - | 9.0 | 50.0 | 7.6 |
| Comp. Example 4 | 100 | - | - | - | 2.5 | - | - | - | - | 9.5 | 6.0 | - | - | 13.9 | 2.1 |
| Example 7 | 100 | - | - | - | 7.0 | - | - | - | - | 6.8 | 4.2 | - | - | 38.9 | 5.9 |
| Example 8 | 100 | - | - | - | 9.0 | - | - | - | - | 5.5 | 3.5 | - | - | 50.0 | 7.6 |
| Example 9 | 90 | 10 | - | - | 9.0 | - | - | - | - | 5.5 | 3.5 | - | - | 50.0 | 7.6 |
| Example 10 | - | - | 60 | 40 | 6.0 | - | - | - | - | 4.0 | 2.0 | - | - | 50.0 | 5.4 |
| Example 11 | 100 | - | - | - | 12.5 | - | - | - | - | 3.1 | 1.5 | - | - | 69.4 | 107 |
| Example 12 | 100 | - | - | - | 180 | - | - | - | - | - | - | - | - | 1000 | 15.3 |
| Comp. Example 5 | 100 | - | - | - | - | - | 5.0 | - | - | 8.0 | 5.0 | - | - | 0.0 | 0.0 |

In Table 1, the Silicone Resin Content A is the content of the thermosetting silicone resin having hydroxyl groups in the binder resin, and Silicone Resin Content B is the content of the thermosetting silicone resin having hydroxyl groups in the cured film-forming component.

**[Table 2].**

| | Moisture Permeability Amount [mg] | Specific Resistance [µΩ·cm] | Elongation Ratio [%] | Printability |
|---|---|---|---|---|
| Example 1 | 74.7 | 239 | 0.56 | 3 |
| Example 2 | 44.2 | 208 | 0.57 | 3 |
| Example 3 | 19.3 | 164 | 0.30 | 2 |
| Comparative Example 1 | 62.7 | 613 | 0.70 | 3 |
| Comparative Example 2 | 289.8 | 601 | 0.91 | 3 |
| Comparative Example 3 | 304.4 | 417 | 0.55 | 3 |
| Example 4 | 72.0 | 274 | 0.57 | 3 |
| Example 5 | 2.0 | 406 | 0.45 | 3 |
| Example 6 | 32.5 | 273 | 0.54 | 4 |
| Comparative Example 4 | 129.4 | 302 | 0.62 | 3 |
| Example 7 | 63.9 | 220 | 0.54 | 3 |
| Example 8 | 43.3 | 196 | 0.52 | 3 |
| Example 9 | 35.7 | 366 | 0.53 | 3 |
| Example 10 | 18.5 | 106 | 0.54 | 3 |
| Example 11 | 28.5 | 191 | 0.50 | 3 |
| Example 12 | 14.8 | 188 | 0.33 | 3 |
| Comparative Example 5 | 347.6 | 257 | 0.54 | 3 |

From the results of Table 2, Examples 1 to 3 and Comparative Example 1 had lower moisture permeability amounts than those of Comparative Example 2 and Comparative Example 3. Examples 1 to 3 and Comparative Example 3 had lower specific resistances than those of Comparative Example 1 and Comparative Example 2. In other words, it was found that Examples 1 to 3 had low moisture permeability amounts and low specific resistances and thus electronic components having both excellent moisture resistance and conductivity compared to those of electronic components produced using the conductive resin compositions of Comparative Examples 1 to 3 were possible to be produced. In addition, Example 1 and Example 2, which maintained low moisture permeability amounts, had higher elongation ratios than that of Example 3. In other words, it was found that Example 1 and Example 2 were possible to produce electronic components having further higher impact resistance compared to that of an electronic component produced using the conductive resin composition of Example 3. Similar to Examples 1 to 3, it was found that Examples 4 to 12 also had low moisture permeability amounts and specific resistances, and thus electronic components having both excellent moisture resistance and conductivity were possible to be produced. On the other hand, Comparative Examples 4 and 5 had high moisture permeability amounts.

## Claims

1. A thermosetting conductive resin composition comprising:
a conductive powder and a resin binder, wherein
the conductive powder comprises a flake-shaped conductive powder;
the resin binder comprises a thermosetting silicone resin having hydroxyl groups; and
25.0% by mass or more of the resin binder is the thermosetting silicone resin having hydroxyl groups.

2. The thermosetting conductive resin composition according to claim 1, wherein 4.0% by mass or more of the components forming a conductive resin layer obtained by heating the thermosetting conductive resin composition is the thermosetting silicone resin having hydroxyl groups.

3. The thermosetting conductive resin composition according to claim 1, wherein 70.0% by mass or less of the resin binder is the thermosetting silicone resin having hydroxyl groups.

4. The thermosetting conductive resin composition according to claim 1, wherein the resin binder further comprises a thermoplastic resin.

5. The thermosetting conductive resin composition according to claim 1, wherein the resin binder further comprises one or more resins selected from the group consisting of a cellulose-based resin, an acetal-based resin, a polyamide resin, an epoxy resin, an acrylic resin, and a (meth)acrylic resin.

6. The thermosetting conductive resin composition according to any one of claims 1 to 5, wherein a moisture permeability amount determined by a moisture permeability amount measurement test described below is 80.0 mg or less:
<Moisture Permeability Amount Measurement Test>
the conductive resin composition is cast at a thickness of 250 µm onto a PET film and the cast composition is cured under conditions of 200°C for 60 minutes; the obtained cured film is cut out in a circular shape having a diameter of 7.5 mm and the circular film is fixed with an adhesive so as to cover a bottle mouth of a 5 ml grass bottle containing 2 g of silica gel; thereafter, the glass bottle is placed in a 750 ml container containing 100 ml of purified water so that the cured film does not come in contact with the purified water and the resultant container in a sealed state is placed in a dryer set at 65°C and left to stand for 15 hours; subsequently, the moisture permeability amount is calculated using the following formula (1): Moisture permeability amount (amount of increased weight) = Weight of glass bottle after being placed in dryer - Weight of glass bottle before being placed in dryer

7. The thermosetting conductive resin composition according to any one of claims 1 to 5, wherein an elongation ratio determined by an elongation ratio measurement test described below is 0.40% or more:
<Elongation Ratio Measurement Test>
the conductive resin composition is cast at a thickness of 250 µm onto a PET film and the cast composition is cured under conditions of 200°C for 60 minutes; the obtained cured film is cut out in a rectangle having a width of 5 mm; a coated film length is measured when a tensile load of 9.8 N is applied in a major axis direction using a viscoelasticity measurement apparatus; subsequently, the elongation ratio is calculated using the following formula (2): Elongation ratio (%) = (Elongated length when load is applied/Length before load is applied) × 100

8. A method for producing an electronic component, the method comprising:
a preparation step of preparing an electrode-forming body for electronic components; and
an electrode forming step of forming an electrode on an outer surface of the electrode-forming body for electronic components, wherein
a conductive resin layer is formed on the electrode-forming body for electronic components by applying the thermosetting conductive resin composition according to any one of claims 1 to 7 onto the electrode-forming body for electronic components and subsequently curing the thermosetting conductive resin composition in the electrode forming step.
